# EUROPEAN PATENT SPECIFICATION

(11) **EP 3 474 143 B1**
(45) Date of publication and mention of the grant of the patent: **29.07.2020**
(21) Application number: 17880722.8
(22) Date of filing: 16.08.2017
(51) Int. Cl.: G06F 11/14

(54) **METHOD AND APPARATUS FOR INCREMENTAL RECOVERY OF DATA**
VERFAHREN UND VORRICHTUNG ZUR SCHRITTWEISEN DATENWIEDERHERSTELLUNG
PROCÉDÉ ET APPAREIL DE RÉCUPÉRATION INCRÉMENTALE DE DONNÉES

(30) Priority: 15.12.2016 CN 201611161748
(43) Date of publication of application: 24.04.2019
(73) Proprietor: Huawei Technologies Co., Ltd., Longgang District Shenzhen, Guangdong 518129 (CN)
(72) Inventor: LI, Guodong, Shenzhen Guangdong 518129 (CN)
(74) Representative: Goddar, Heinz J.
(86) International application number: PCT/CN2017/097678
(87) International publication number: WO 2018/107792

(56) References cited:
- CN-A- 101 770 410
- CN-A- 103 034 566
- CN-A- 103 645 968
- CN-A- 104 166 606
- CN-A- 106 681 862
- US-A1- 2005 010 592
- US-B1- 6 665 815
- US-B1- 7 802 134
- US-B1- 8 918 606

## Description

### TECHNICAL FIELD

Embodiments of this application relate to data storage technologies, and in particular, to an incremental data restoration method and apparatus.

### BACKGROUND

In an information-based era, a large amount of data needs to be stored in a computer. To ensure that data is not lost due to a disaster, backup of the data is usually required. After the data is damaged, the data can be restored based on backup data.

Data restoration includes full restoration and incremental restoration. The full restoration is to restore all data, and the incremental restoration is to restore only a modified part between a current snapshot and a snapshot of a backup restoration point based on an existing disk. Because only data of the changed part is restored in the incremental restoration, and this part of data is usually far less than all data, a data restoration amount can be greatly reduced, and a restoration process is sped up. In the prior art, when data is restored through incremental restoration, a difference between a current snapshot and a snapshot of a backup restoration point is first analyzed, and a determined modified part is restored by using data at the restoration point.

However, in the prior art, because incremental data restoration can be performed only after a difference between a current snapshot and a snapshot of a backup restore point is analyzed, how to perform incremental data restoration when there is no snapshot of the backup restoration point becomes a technical problem that needs to be resolved urgently.
CN 103034566 A discloses a method for restoring a virtual machine. The method comprises: receiving an incremental data comparing command sent by a backup server by a virtual platform, wherein the incremental data comparing command contains first changing identification information; carrying out snapshot operation on the virtual machine at the current moment according to the incremental data comparing command to obtain second changing identification information; determining a changing data block with data content which is changed in a magnetic disc of the virtual machine according to the first changing identification information and the second changing identification information; and sending block identification information of the changing data block to the backup server.

CN 104166606 discloses a file backup method, wherein a main storage device is divided into the storage space of master file N sub-block, each backup time at incremental backup, an upper backup time is copied in local backup buffer zone to the data in the sub-block being updated between this backup time, each backup time at differential backup, during initial backup, being merged into data in the sub-block being updated between this backup time copies in local backup buffer zone , data in the sub-block being updated that the main storage device only needs to store in synchronous local buffer zone.

US8918606 discloses an incremental backup technique for providing incremental backup validation comprising setting one or more electronic storage indicators, each indicating a respective allocated portion of electronic storage, wherein the storage indicators are compared with changed data indicators to identify allocated portions of the electronic storage containing data that is unchanged since the prior backup for backup validation.

US7802134 discloses a method for restoration of backed up data by restoring incremental backups in reverse chronological order.

US6665815 discloses a backup apparatus for protecting the data volume in a computer system function by acquiring a base state snapshot and a sequential series of data volume snapshots, the backup apparatus concurrently generating succedent and precedent lists of snapshot differences, which are used to create succedent and precedent backups respectively.

### SUMMARY

In accordance with the invention, to resolve a prior-art technical problem of how to perform incremental data restoration when there is no snapshot of a backup restoration point, it is provided an incremental data restoration method as defined in detail in the appended independent claim 1 and an incremental data restoration apparatus as defined in detail in the appended independent claim 5. Possible implementation manners are disclosed in the dependent claims.

According to a first aspect, an incremental data restoration method is provided, the method includes:
creating a current snapshot of data;
determining a changed data block in the current snapshot relative to an m^{th} backup, where m is a positive integer, and the m^{th} backup is not a last backup; and
restoring data corresponding to the changed data block to data corresponding to a corresponding data block in the m^{th} backup.

According to the incremental data restoration method provided in the first aspect, the current snapshot of the data is created, the changed data block in the current snapshot relative to the m^{th} backup is determined, and the data corresponding to the changed data block is restored to the data corresponding to the corresponding data block in the m^{th} backup. When the m^{th} backup is not a last backup, in other words, there is no snapshot of the m^{th} backup, the changed data block in the current snapshot relative to the m^{th} backup is determined, and the data corresponding to the changed data block is restored to the data corresponding to the corresponding data block in the m^{th} backup, so that incremental restoration is always effective, and incremental restoration reliability can be improved.

The determining a changed data block in the current snapshot relative to an m^{th} backup includes:
determining whether there is a changed data block between the current snapshot and a snapshot of a t^{th} backup, where t is a positive integer, and m is less than t; and
if there is no changed data block between the current snapshot and the snapshot of the t^{th} backup, determining a changed data block in the t^{th} backup relative to the m^{th} backup. The snapshot of the t^{th} backup is a snapshot of a last backup, and there is a snapshot of only the t^{th} backup.

The restoring data corresponding to the changed data block to data corresponding to a corresponding data block in the m^{th} backup includes:
restoring data corresponding to the changed data block in the t^{th} backup relative to the m^{th} backup to data corresponding to a corresponding data block in the m^{th} backup.

In the foregoing design, the snapshot of the t^{th} backup is a snapshot of a last backup. In addition, there is a snapshot of only the t^{th} backup, and there are no snapshots of other (t-1) backups. A system stores only the current snapshot and the snapshot of the t^{th} backup, and does not need to store snapshots of all backups. Therefore, storage space can be saved, and system performance can be improved.

When there is no changed data block between the current snapshot and the snapshot of the t^{th} backup, the data corresponding to the changed data block in the t^{th} backup relative to the m^{th} backup may be directly restored to the data corresponding to the corresponding data block in the m^{th} backup. Therefore, data restoration efficiency can be improved.

Or if there is a changed data block between the current snapshot and the snapshot of the t^{th} backup, the restoring data corresponding to the changed data block to data corresponding to a corresponding data block in the m^{th} backup includes:
restoring data corresponding to a changed data block in the current snapshot relative to the snapshot of the t^{th} backup to data corresponding to a corresponding data block in the t^{th} backup;
determining a changed data block in the t^{th} backup relative to the m^{th} backup; and
restoring data corresponding to the changed data block in the t^{th} backup relative to the m^{th} backup to data corresponding to a corresponding data block in the m^{th} backup.

In the foregoing possible design, if there is a changed data block between the current snapshot and the snapshot of the t^{th} backup, the data corresponding to the changed data block in the current snapshot relative to the snapshot of the t^{th} backup may be first restored to the data corresponding to the corresponding data block in the t^{th} backup, and then the data corresponding to the changed data block in the t^{th} backup relative to the m^{th} backup is restored to the data corresponding to the corresponding data block in the m^{th} backup. When the m^{th} backup is not a last backup, in other words, there is no snapshot of the m^{th} backup, the changed data block in the current snapshot relative to the m^{th} backup is determined, and the data corresponding to the changed data block is restored to the data corresponding to the corresponding data block in the m^{th} backup, so that incremental restoration is always effective, and incremental restoration reliability can be improved.

In a possible design, the method further includes:
if there is a changed data block between the current snapshot and the snapshot of the t^{th} backup, the restoring data corresponding to the changed data block to data corresponding to a corresponding data block in the m^{th} backup includes:
recording a first storage location of a changed data block in the current snapshot relative to the snapshot of the t^{th} backup;
determining a changed data block in the t^{th} backup relative to the m^{th} backup, and recording a second storage location of the changed data block in the t^{th} backup relative to the m^{th} backup;
restoring data in the data block corresponding to the recorded first storage location to data corresponding to a corresponding data block in the t^{th} backup; and
restoring data in the data block corresponding to the recorded second storage location to data corresponding to a corresponding data block in the m^{th} backup.

In the foregoing possible design, if there is a changed data block between the current snapshot and the snapshot of the t^{th} backup, the first storage location of the changed data block in the current snapshot relative to the snapshot of the t^{th} backup may be recorded; the changed data block in the t^{th} backup relative to the m^{th} backup is determined, and the second storage location of the changed data block in the t^{th} backup relative to the m^{th} backup is recorded; the data in the data block corresponding to the recorded first storage location is restored to the data corresponding to the corresponding data block in the t^{th} backup; and the data in the data block corresponding to the recorded second storage location is restored to the data corresponding to the corresponding data block in the m^{th} backup. Data restoration efficiency can be improved because all changed data blocks are restored together after all the changed data blocks are determined.

In a possible design, before the determining a changed data block in the t^{th} backup relative to the m^{th} backup, the method further includes:
creating a backup mapping table, where the backup mapping table includes a storage location of the data block and a change identifier of the data block, the change identifier is used to indicate whether the data block changes relative to a previous backup, and a change identifier value corresponding to the data block varies each time after the data block changes.

In a possible design, the determining a changed data block in the t^{th} backup relative to the m^{th} backup includes:
determining, through comparison, whether a change identifier value corresponding to a data block in a backup mapping table of the t^{th} backup is the same as a change identifier value corresponding to a data block at a same storage location in a backup mapping table of the m^{th} backup; and
determining a data block with a different change identifier value as the changed data block in the t^{th} backup relative to the m^{th} backup.

In the foregoing possible design, the changed data block in the t^{th} backup relative to the m^{th} backup is determined by determining, through comparison, whether the change identifier value corresponding to the data block in the backup mapping table of the t^{th} backup is the same as the change identifier value corresponding to the data block at the same storage location in the backup mapping table of the m^{th} backup. Therefore, efficiency of determining a changed data block can be improved.

According to a second aspect, an incremental data restoration apparatus is provided, the apparatus includes:
a creation module, configured to create a current snapshot of data;
a determining module, configured to determine a changed data block in the current snapshot relative to an m^{th} backup, where m is a positive integer, and the m^{th} backup is not a last backup; and
a restoration module, configured to restore data corresponding to the changed data block to data corresponding to a corresponding data block in the m^{th} backup.

The determining module is specifically configured to:
determine whether there is a changed data block between the current snapshot and a snapshot of a t^{th} backup, where t is a positive integer, and m is less than t; and
if there is no changed data block between the current snapshot and the snapshot of the t^{th} backup, determine a changed data block in the t^{th} backup relative to the m^{th} backup.

The restoration module is specifically configured to:
restore data corresponding to the changed data block in the t^{th} backup relative to the m^{th} backup to data corresponding to a corresponding data block in the m^{th} backup.

Or if there is a changed data block between the current snapshot and the snapshot of the t^{th} backup, the restoration module is specifically configured to:
restore data corresponding to a changed data block in the current snapshot relative to the snapshot of the t^{th} backup to data corresponding to a corresponding data block in the t^{th} backup;
determine a changed data block in the t^{th} backup relative to the m^{th} backup; and
restore data corresponding to the changed data block in the t^{th} backup relative to the m^{th} backup to data corresponding to a corresponding data block in the m^{th} backup.

In a possible design, if there is a changed data block between the current snapshot and the snapshot of the t^{th} backup, the restoration module is specifically configured to:
record a first storage location of a changed data block in the current snapshot relative to the snapshot of the t^{th} backup;
determine a changed data block in the t^{th} backup relative to the m^{th} backup, and record a second storage location of the changed data block in the t^{th} backup relative to the m^{th} backup;
restore data in the data block corresponding to the recorded first storage location to data corresponding to a corresponding data block in the t^{th} backup; and
restore data in the data block corresponding to the recorded second storage location to data corresponding to a corresponding data block in the m^{th} backup.

In a possible design, the creation module is further configured to create a backup mapping table, where the backup mapping table includes a storage location of the data block and a change identifier of the data block, the change identifier is used to indicate whether the data block changes relative to a previous backup, and a change identifier value corresponding to the data block varies each time after the data block changes.

In a possible design, the determining module is specifically configured to:
determine, through comparison, whether a change identifier value corresponding to a data block in a backup mapping table of the t^{th} backup is the same as a change identifier value corresponding to a data block at a same storage location in a backup mapping table of the m^{th} backup; and
determine a data block with a different change identifier value as the changed data block in the t^{th} backup relative to the m^{th} backup.

For beneficial effects of the incremental data restoration apparatus provided in the second aspect and the possible designs of the second aspect, refer to the beneficial effects brought by the first aspect and the possible designs of the first aspect. Details are not described herein again.

According to a third aspect, an embodiment of this application provides a terminal device, including:
a processor, configured to create a current snapshot of data.

The processor is configured to perform the method steps mentioned in the first aspect or the possible designs of the first aspect.

For beneficial effects of the terminal device provided in the third aspect and the possible designs of the third aspect, refer to the beneficial effects brought by the first aspect and the possible designs of the first aspect. Details are not described herein again.

### BRIEF DESCRIPTION OF DRAWINGS

To describe the technical solutions in the embodiments of the present invention more clearly, the following briefly introduces the accompanying drawings required for describing the embodiments.
FIG. 1 is a schematic diagram of a data backup;
FIG. 2 is a schematic diagram of an incremental backup;
FIG. 3 is a schematic flowchart of Embodiment 1 of an incremental data restoration method according to an embodiment of this application;
FIG. 4 is a schematic diagram of incremental restoration;
FIG. 5 is a schematic flowchart of determining a changed data block;
FIG. 6a is a schematic diagram of a backup mapping table in a full backup;
FIG. 6b is a schematic diagram of a backup mapping table in an incremental backup 1;
FIG. 7a is a schematic diagram of a backup mapping table in an m^{th} backup;
FIG. 7b is a schematic diagram of a backup mapping table in a t^{th} backup;
FIG. 8 is a schematic flowchart of Embodiment 2 of an incremental data restoration method;
FIG. 9 is a schematic structural diagram of Embodiment 1 of an incremental data restoration apparatus according to an embodiment of the present invention; and
FIG. 10 is a schematic structural diagram of an embodiment of a terminal device according to an embodiment of the present invention.

### DESCRIPTION OF EMBODIMENTS

The technical solutions according to embodiments of the present invention are clearly and completely described in the following with reference to the accompanying drawings.

An incremental data restoration method in the embodiments of this application is applicable to an incremental data backup scenario. A data difference between two backups may be quickly determined through comparison only by determining, through comparison, a difference between snapshots corresponding to the two backups. However, excessive snapshots not only occupy system storage space, but also affect system performance. Therefore, only a snapshot of a latest backup is reserved in most backup systems. However, if a backup restoration point selected by a user is not the last backup, incremental restoration fails, and only full restoration can be used.

Therefore, the incremental data restoration method and apparatus provided in the embodiments of this application are intended to resolve a prior-art technical problem of how to restore data through incremental restoration when a backup restoration point is not a last backup, that is, when there is no snapshot of the backup restoration point.

An incremental backup is first described in detail before specific implementations of this application are described.

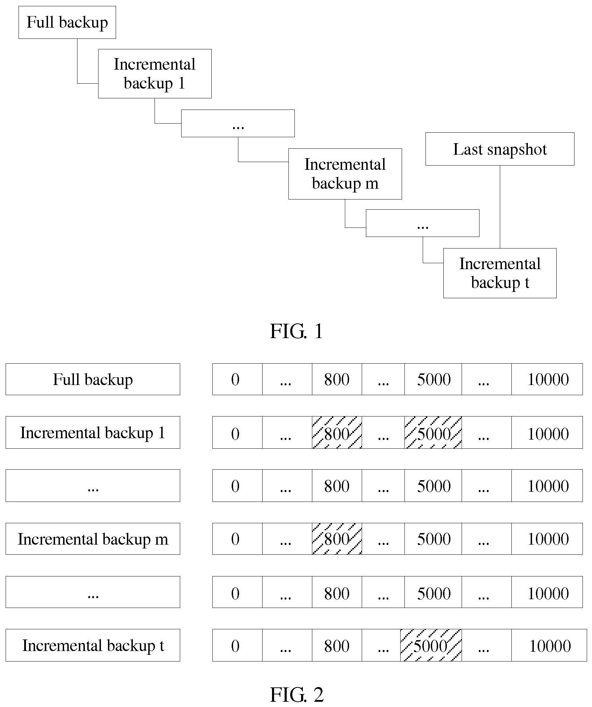

FIG. 1 is a schematic diagram of a data backup. As shown in FIG. 1, when a data backup is performed, there is usually one full backup, and all other t backups are incremental backups. Only a last snapshot, namely, a snapshot corresponding to an incremental backup t, is reserved. FIG. 2 is a schematic diagram of an incremental backup. As shown in FIG. 2, it is assumed that 10000 blocks of data in total need to be backed up. A shaded block in FIG. 2 means that data in the block is different from previous snapshot data. When an incremental backup is performed, only a difference between snapshots needs to be known, a modified part is backed up, and another data block existing before may be still used. For example, only a data block 800 and a data block 5000 are modified in a snapshot of an incremental backup 1 relative to a snapshot of a full backup. Therefore, only the data block 800 and the data block 5000 need to be backed up, and other parts may not be backed up. A manner of another incremental backup is similar to that of the incremental backup 1. Details are not described herein again.

Specific embodiments are used below to describe in detail the technical solutions of this application. The following several specific embodiments may be combined with each other, and a same or similar concept or process may not be described repeatedly in some embodiments.

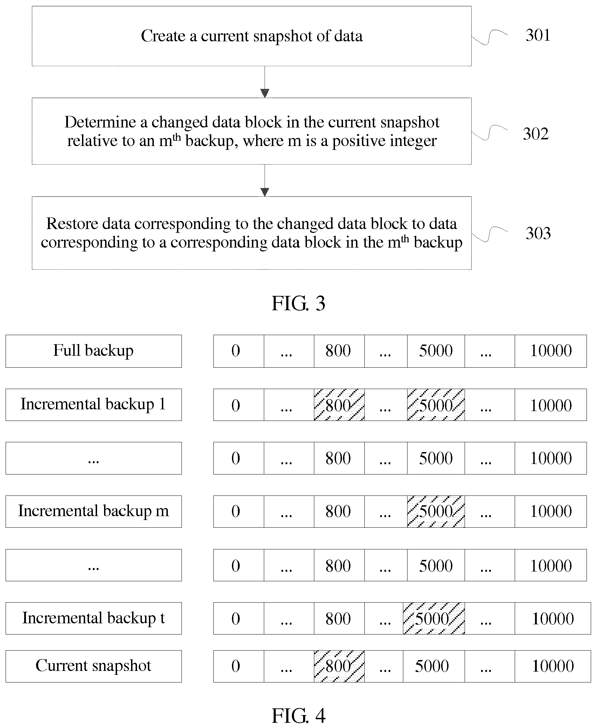

FIG. 3 is a schematic flowchart of Embodiment 1 of an incremental data restoration method according to an embodiment of this application. This embodiment of this application provides an incremental data restoration method. The method may be performed by any apparatus that performs the incremental data restoration method, and the apparatus may be implemented by using software and/or hardware. In this embodiment, the apparatus may be integrated into a terminal device. As shown in FIG. 3, the method in this embodiment may include the following steps.

Step 301: Create a current snapshot of data.

In this embodiment, when the data is damaged or a user expects to restore the data to data at a previous moment, the terminal device needs to create a current snapshot of current data, to determine a difference between the current snapshot and an m^{th} backup. The m^{th} backup is a backup restoration point to which the user expects to restore the data.

Step 302: Determine a changed data block in the current snapshot relative to an m^{th} backup, where m is a positive integer.

In this embodiment, after creating the current snapshot, the terminal device may determine the changed data block in the current snapshot relative to the m^{th} backup. The m^{th} backup is a backup restoration point, and is not a last backup, in other words, is an intermediate backup.

Step 303: Restore data corresponding to the changed data block to data corresponding to a corresponding data block in the m^{th} backup.

In this embodiment, after determining the changed data block, the terminal device may restore the data corresponding to the changed data block in the current snapshot to the data corresponding to the corresponding data block in the m^{th} backup.

Optionally, FIG. 4 is a schematic diagram of incremental restoration. If the backup restoration point is a last backup, the terminal device compares the current snapshot with a snapshot of a last backup t, and determines that only a data block 800 changes. Therefore, when data restoration is performed, only data corresponding to a data block 800 in the current snapshot needs to be restored to data corresponding to a data block 800 in an incremental backup m, so that incremental restoration can be completed.

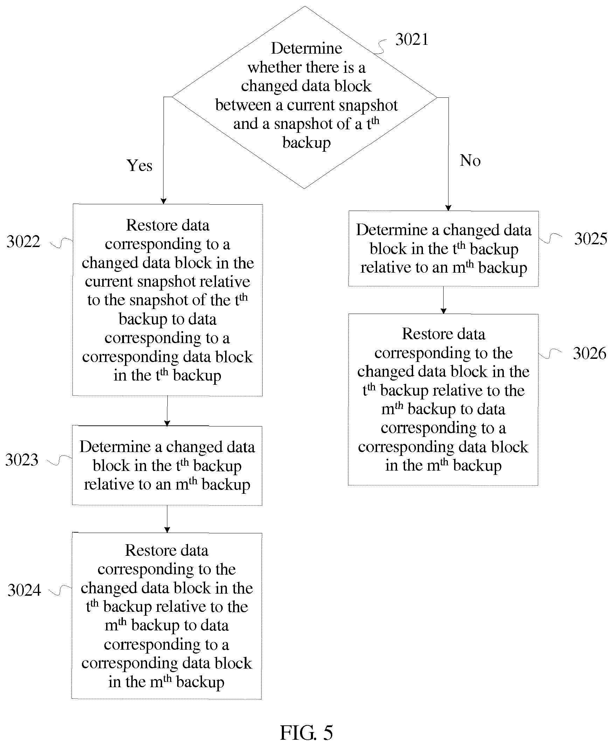

Optionally, FIG. 5 is a schematic flowchart of determining a changed data block. As shown in FIG. 5, if the backup restoration point is not a last backup, step 303 may specifically include the following steps.

Step 3021: Determine whether there is a changed data block between the current snapshot and a snapshot of a t^{th} backup.

The parameter t is a positive integer, and m is less than t. In this embodiment, still referring to FIG. 4, because there is a snapshot of the t^{th} backup, a data block that changes may be learned by comparing the current snapshot with the snapshot of the t^{th} backup. As shown in FIG. 4, the data block 800 in the current snapshot changes relative to the t^{th} backup.

It should be noted that the snapshot of the t^{th} backup is a snapshot of a last backup. In addition, there is a snapshot of only the t^{th} backup, and there are no snapshots of other (t-1) backups. A system stores only the current snapshot and the snapshot of the t^{th} backup, and does not need to store snapshots of all backups. Therefore, storage space can be saved, and system performance can be improved.

Step 3023 and step 3024 are performed after step 3022 if there is a changed data block between the current snapshot and the snapshot of the t^{th} backup; or step 3025 and step 3026 are performed if there is no changed data block between the current snapshot and the snapshot of the t^{th} backup.

Step 3022: Restore data corresponding to a changed data block in the current snapshot relative to the snapshot of the t^{th} backup to data corresponding to a corresponding data block in the t^{th} backup.

In this embodiment, if there is a changed data block between the current snapshot and the snapshot of the t^{th} backup, the data corresponding to the determined changed data block is restored to the data corresponding to the corresponding data block in the t^{th} backup. Still referring to FIG. 4, the data block 800 in the current snapshot changes relative to the snapshot of the t^{th} backup. Therefore, the data corresponding to the data block 800 in the current snapshot may be restored to the data corresponding to the data block 800 in the t^{th} backup.

Step 3023: Determine a changed data block in the t^{th} backup relative to the m^{th} backup.

In this embodiment, if there is a changed data block between the current snapshot and the snapshot of the t^{th} backup, the terminal device determines the changed data block in the t^{th} backup relative to the m^{th} backup after restoring the data corresponding to the changed data block in the current snapshot to the data corresponding to the corresponding data block in the t^{th} backup.

Optionally, before determining the changed data block in the t^{th} backup relative to the m^{th} backup, the terminal device may further create a backup mapping table. The backup mapping table includes a storage location of a data block and a change identifier of the data block, the change identifier is used to indicate whether the data block changes relative to a previous backup, and a change identifier value corresponding to the data block varies each time after the data block changes.

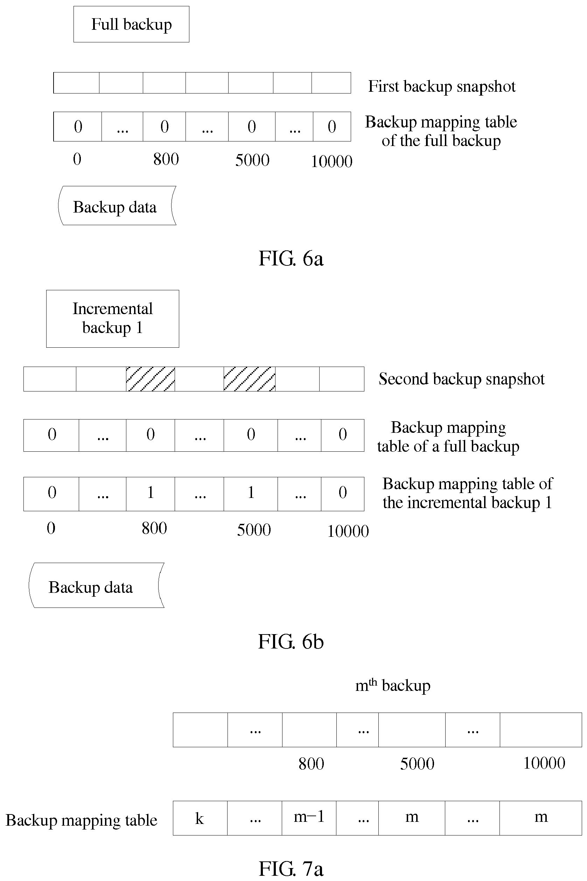

Specifically, a specific data storage location of each backup data block needs to be learned in both an incremental backup and a full backup. In a specific implementation process, an array may be stored in the backup mapping table, a sequence number of each array is a block number of a data block, an array value is a change identifier, the change identifier and the block number can be used to obtain a unique file name, and a specific data block is stored. For example, FIG. 6a is a schematic diagram of a backup mapping table in a full backup, and FIG. 6b is a schematic diagram of a backup mapping table in an incremental backup 1. As shown in FIG. 6a and FIG. 6b, the terminal device may create a backup mapping table in the full backup, and the backup mapping table stores a storage location of a data block and a change identifier corresponding to the data block. For example, a change identifier of a data block 0 is 0, ..., a change identifier of a data block 800 is 0, ..., and a change identifier of a data block 10000 is 0. Data corresponding to a data block 800 and data corresponding to a data block 5000 change in the incremental backup 1. Therefore, the terminal device creates a backup mapping table corresponding to the incremental backup 1, to be specific, updates change identifier values corresponding to the data block 800 and the data block 5000 in the backup mapping table to 1. It should be noted that, a change identifier value corresponding to each data block in the full backup is still stored, and is not deleted, to facilitate subsequent comparison. Similarly, in an incremental backup 2, if a data block changes, a change identifier value corresponding to the changed data block may change. It should be noted that a change identifier value obtained after each change is different from a historical value. For example, a change identifier value corresponding to the data block 800 is 0 in the full backup, the data block 800 changes in the incremental backup 1, and the change identifier value corresponding to the data block 800 changes to 1. The data block 800 changes again in the incremental backup 2, and the change identifier value corresponding to the data block 800 changes to 2 or the like. In other words, the change identifier value corresponding to the data block 800 cannot be 0 and 1 again.

After creating the backup mapping table, the terminal device determines the changed data block in the t^{th} backup relative to the m^{th} backup based on the change identifier in the backup mapping table. In actual application, the terminal device determines, through comparison, whether a change identifier value corresponding to a data block in a backup mapping table of the t^{th} backup is the same as a change identifier value corresponding to a data block at a same storage location in a backup mapping table of the m^{th} backup, and determines that a data block with a different change identifier value as the changed data block in the t^{th} backup relative to the m^{th} backup.

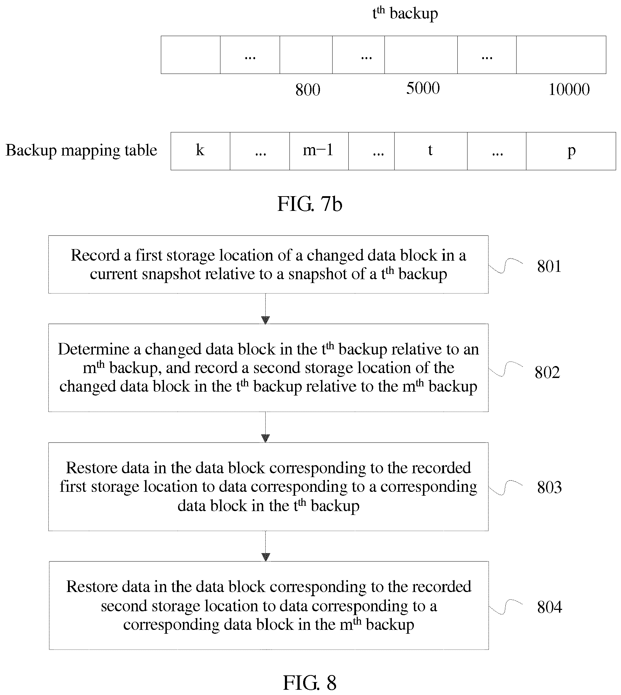

Specifically, because the backup mapping table stores the change identifier corresponding to the data block, the terminal device may determine the changed data block in the t^{th} backup relative to the m^{th} backup by comparing a change identifier value corresponding to a data block in the t^{th} backup with a change identifier value corresponding to a data block in the m^{th} backup. For example, FIG. 7a is a schematic diagram of a backup mapping table in an m^{th} backup, and FIG. 7b is a schematic diagram of a backup mapping table in a t^{th} backup. As shown in FIG. 7a and FIG. 7b, in the m^{th} backup, a change identifier value of a data block 800 is m-1, a change identifier value of a data block 5000 is m, and a change identifier value of a data block 10000 is m; in the t^{th} backup, a change identifier value of a data block 800 is m-1, a change identifier value of a data block 5000 is t, and a change identifier value of a data block 10000 is p. Because both the change identifier of the data block 800 in the m^{th} backup and the change identifier of the data block 800 in the t^{th} backup are m-1, the data block 800 does not change. However, the change identifier value of the data block 5000 and the change identifier value of the data block 10000 in the t^{th} backup change relative to the m^{th} backup. Therefore, the data block 500 and the data block 10000 are changed data blocks in the t^{th} backup relative to the m^{th} backup.

Step 3024: Restore data corresponding to the changed data block in the t^{th} backup relative to the m^{th} backup to data corresponding to a corresponding data block in the m^{th} backup.

In this embodiment, after determining the changed data block in the t^{th} backup relative to the m^{th} backup, the terminal device may restore the data corresponding to the changed data block to the data corresponding to the corresponding data block in the m^{th} backup. Still referring to FIG. 7a and FIG. 7b, because the data block 5000 and the data block 10000 change, data corresponding to the data block 5000 and data corresponding to the data block 10000 are restored to data corresponding to the data block 5000 and data corresponding to the data block 10000 in the m^{th} backup when data restoration is performed.

Step 3025: Determine a changed data block in the t^{th} backup relative to the m^{th} backup.

In this embodiment, the changed data block in the t^{th} backup relative to the m^{th} backup may be directly determined if there is no changed data block between the current snapshot and the snapshot of the t^{th} backup. A specific manner of determining the changed data block in the t^{th} backup relative to the m^{th} backup is similar to the determining manner in step 3023. Details are not described herein again.

Step 3026: Restore data corresponding to the changed data block in the t^{th} backup relative to the m^{th} backup to data corresponding to a corresponding data block in the m^{th} backup.

In this embodiment, after the changed data block in the t^{th} backup relative to the m^{th} backup is determined, the data corresponding to the changed data block may be directly restored to the data corresponding to the corresponding data block in the m^{th} backup.

According to the incremental data restoration method provided in this embodiment of this application, the current snapshot of the data is created, the changed data block in the current snapshot relative to the m^{th} backup is determined, and the data corresponding to the changed data block is restored to the data corresponding to the corresponding data block in the m^{th} backup. When the m^{th} backup is not a last backup, in other words, there is no snapshot of the m^{th} backup, the changed data block in the current snapshot relative to the m^{th} backup is determined, and the data corresponding to the changed data block is restored to the data corresponding to the corresponding data block in the m^{th} backup, so that incremental restoration is always effective, and incremental restoration reliability can be improved.

Optionally, FIG. 8 is a schematic flowchart of Embodiment 2 of an incremental data restoration method. As shown in FIG. 8, if there is a changed data block between a current snapshot and a snapshot of a t^{th} backup, step 303 may further include the following steps.

Step 801: Record a first storage location of a changed data block in a current snapshot relative to a snapshot of a t^{th} backup.

In this embodiment, the first storage location of the changed data block in the current snapshot relative to the snapshot of the t^{th} backup may be first recorded if there is a changed data block between the current snapshot and the snapshot of the t^{th} backup. For example, a storage location of a data block 800 in the current snapshot may be recorded if the data block 800 changes relative to the snapshot of the t^{th} backup.

Step 802: Determine a changed data block in the t^{th} backup relative to an m^{th} backup, and record a second storage location of the changed data block in the t^{th} backup relative to the m^{th} backup.

In this embodiment, after determining the first storage location of the changed data block in the current snapshot relative to the snapshot of the t^{th} backup, a terminal device determines the changed data block in the t^{th} backup relative to the m^{th} backup. A specific determining manner is similar to that in step 3023. Details are not described herein again. The second storage location of the changed data block is recorded after the changed data block in the t^{th} backup relative to the m^{th} backup is determined. For example, a storage location of a data block 10000 in the t^{th} backup may be recorded if the data block 10000 changes relative to the m^{th} backup.

Step 803: Restore data in the data block corresponding to the recorded first storage location to data corresponding to a corresponding data block in the t^{th} backup.

In this embodiment, the terminal device does not restore a changed data block after determining the changed data block. Instead, the terminal device records a storage location of the changed data block, and restores all changed data blocks together after determining all the changed data blocks. After recording the first storage location, the terminal device restores the data in the data block corresponding to the recorded first storage location to the data corresponding to the corresponding data block in the t^{th} backup.

Step 804: Restore data in the data block corresponding to the recorded second storage location to data corresponding to a corresponding data block in the m^{th} backup.

In this embodiment, after restoring the data in the data block corresponding to the first storage location, the terminal device restores the data in the data block corresponding to the second storage location to the data corresponding to the corresponding data block in the m^{th} backup.

According to the incremental data restoration method provided in this embodiment of this application, if there is a changed data block between the current snapshot and the snapshot of the t^{th} backup, the first storage location of the changed data block in the current snapshot relative to the snapshot of the t^{th} backup may be recorded; the changed data block in the t^{th} backup relative to the m^{th} backup is determined, and the second storage location of the changed data block in the t^{th} backup relative to the m^{th} backup is recorded; the data in the data block corresponding to the recorded first storage location is restored to the data corresponding to the corresponding data block in the t^{th} backup; and the data in the data block corresponding to the recorded second storage location is restored to the data corresponding to the corresponding data block in the m^{th} backup. Data restoration efficiency can be improved because all changed data blocks are restored together after all the changed data blocks are determined.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

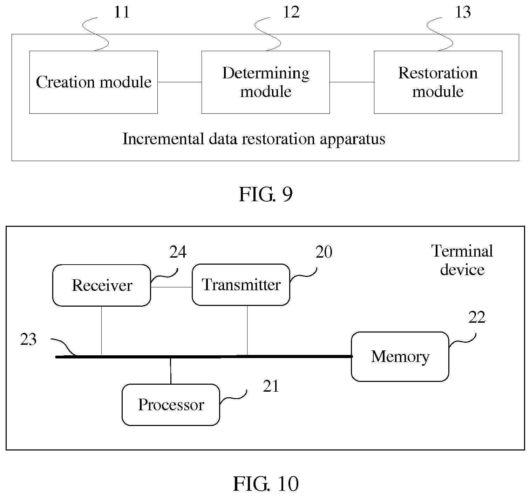

FIG. 9 is a schematic structural diagram of Embodiment 1 of an incremental data restoration apparatus according to an embodiment of the present invention. The restoration apparatus may be an independent terminal device, or may be an apparatus integrated into a terminal device. The apparatus may be implemented by using software, hardware, or a combination of software and hardware. As shown in FIG. 9, the restoration apparatus includes:
a creation module 11, configured to create a current snapshot of data;
a determining module 12, configured to determine a changed data block in the current snapshot relative to an m^{th} backup, where m is a positive integer, and the m^{th} backup is not a last backup; and
a restoration module 13, configured to restore data corresponding to the changed data block to data corresponding to a corresponding data block in the m^{th} backup.

Optionally, the creation module 11, the determining module 12, and the restoration module 13 may be correspondingly a processor in the terminal device.

The incremental data restoration apparatus provided in this embodiment of the present invention can perform the foregoing method embodiment. An implementation principle and a technical effect thereof are similar to those of the method embodiment, and are not described herein again.

Optionally, the determining module 12 is specifically configured to:
determine whether there is a changed data block between the current snapshot and a snapshot of a t^{th} backup, where t is a positive integer, and m is less than t; and
determine a changed data block in the t^{th} backup relative to the m^{th} backup if there is no changed data block between the current snapshot and the snapshot of the t^{th} backup.

Optionally, the restoration module 13 is specifically configured to:
restore data corresponding to the changed data block in the t^{th} backup relative to the m^{th} backup to data corresponding to a corresponding data block in the m^{th} backup.

Optionally, if there is a changed data block between the current snapshot and the snapshot of the t^{th} backup, the restoration module 13 is specifically configured to:
restore data corresponding to a changed data block in the current snapshot relative to the snapshot of the t^{th} backup to data corresponding to a corresponding data block in the t^{th} backup;
determine a changed data block in the t^{th} backup relative to the m^{th} backup; and
restore data corresponding to the changed data block in the t^{th} backup relative to the m^{th} backup to data corresponding to a corresponding data block in the m^{th} backup.

Optionally, if there is a changed data block between the current snapshot and the snapshot of the t^{th} backup, the restoration module 13 is specifically configured to:
record a first storage location of a changed data block in the current snapshot relative to the snapshot of the t^{th} backup;
determine a changed data block in the t^{th} backup relative to the m^{th} backup, and record a second storage location of the changed data block in the t^{th} backup relative to the m^{th} backup;
restore data in the data block corresponding to the recorded first storage location to data corresponding to a corresponding data block in the t^{th} backup; and
restore data in the data block corresponding to the recorded second storage location to data corresponding to a corresponding data block in the m^{th} backup.

Optionally, the creation module 11 is further configured to create a backup mapping table. The backup mapping table includes a storage location of the data block and a change identifier of the data block, the change identifier is used to indicate whether the data block changes relative to a previous backup, and a change identifier value corresponding to the data block varies each time after the data block changes.

Optionally, the determining module 12 is specifically configured to:
determine, through comparison, whether a change identifier value corresponding to a data block in a backup mapping table of the t^{th} backup is the same as a change identifier value corresponding to a data block at a same storage location in a backup mapping table of the m^{th} backup; and
determine a data block with a different change identifier value as the changed data block in the t^{th} backup relative to the m^{th} backup.

The incremental data restoration apparatus provided in this embodiment of the present invention can perform the foregoing method embodiment. An implementation principle and a technical effect thereof are similar to those of the method embodiment, and are not described herein again.

FIG. 10 is a schematic structural diagram of an embodiment of a terminal device according to an embodiment of the present invention. As shown in FIG. 10, the terminal device may include a transmitter 20, a processor 21, a memory 22, and at least one communications bus 23. The communications bus 23 is configured to implement a communication connection between components. The memory 22 may include a high-speed RAM memory, or may include a nonvolatile memory NVM, for example, at least one magnetic disk storage. The memory 22 may store various programs, to complete various processing functions and implement steps of the method in the embodiments. In addition, the terminal device may further include a receiver 24. The receiver 24 in this embodiment may be a corresponding input interface that has a communication function and an information receiving function. The transmitter 20 in this embodiment may be a corresponding output interface that has a communication function and an information sending function. Optionally, the transmitter 20 and the receiver 24 may be integrated into one communications interface, or may be two independent communications interfaces.

In this embodiment, the processor 21 is configured to create a current snapshot of data.

The processor 21 is further configured to determine a changed data block in the current snapshot relative to an m^{th} backup, where m is a positive integer, and the m^{th} backup is not a last backup.

The processor 21 is further configured to restore data corresponding to the changed data block to data corresponding to a corresponding data block in the m^{th} backup.

Optionally, the processor 21 is further configured to determine whether there is a changed data block between the current snapshot and a snapshot of a t^{th} backup, where t is a positive integer, and m is less than t.

The processor 21 is further configured to determine a changed data block in the t^{th} backup relative to the m^{th} backup if there is no changed data block between the current snapshot and the snapshot of the t^{th} backup.

Optionally, the processor 21 is further configured to restore data corresponding to the changed data block in the t^{th} backup relative to the m^{th} backup to data corresponding to a corresponding data block in the m^{th} backup.

Optionally, if there is a changed data block between the current snapshot and the snapshot of the t^{th} backup, the processor 21 is further configured to restore data corresponding to a changed data block in the current snapshot relative to the snapshot of the t^{th} backup to data corresponding to a corresponding data block in the t^{th} backup.

The processor 21 is further configured to determine a changed data block in the t^{th} backup relative to the m^{th} backup.

The processor 21 is further configured to restore data corresponding to the changed data block in the t^{th} backup relative to the m^{th} backup to data corresponding to a corresponding data block in the m^{th} backup.

Optionally, if there is a changed data block between the current snapshot and the snapshot of the t^{th} backup, the processor 21 is further configured to record a first storage location of a changed data block in the current snapshot relative to the snapshot of the t^{th} backup.

The processor 21 is further configured to: determine a changed data block in the t^{th} backup relative to the m^{th} backup, and record a second storage location of the changed data block in the t^{th} backup relative to the m^{th} backup.

The processor 21 is further configured to restore data in the data block corresponding to the recorded first storage location to data corresponding to a corresponding data block in the t^{th} backup.

The processor 21 is further configured to restore data in the data block corresponding to the recorded second storage location to data corresponding to a corresponding data block in the m^{th} backup.

Optionally, the processor 21 is further configured to create a backup mapping table. The backup mapping table includes a storage location of the data block and a change identifier of the data block, the change identifier is used to indicate whether the data block changes relative to a previous backup, and a change identifier value corresponding to the data block varies each time after the data block changes.

Optionally, the processor 21 is further configured to determine, through comparison, whether a change identifier value corresponding to a data block in a backup mapping table of the t^{th} backup is the same as a change identifier value corresponding to a data block at a same storage location in a backup mapping table of the m^{th} backup.

The processor 21 is further configured to determine a data block with a different change identifier value as the changed data block in the t^{th} backup relative to the m^{th} backup.

The terminal device provided in this embodiment of the present invention can perform the foregoing method embodiment. An implementation principle and a technical effect thereof are similar to those of the method embodiment, and are not described herein again.

Finally, it should be noted that functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of this application.

## Claims

1. An incremental data restoration method, comprising:
creating (301) a current snapshot of data;
determining (302, 3021) a changed data block in the current snapshot relative to an m^{th} backup, wherein m is a positive integer, and the m^{th} backup is not a last backup; and
restoring (303, 3022, 3023, 3024, 3026) data corresponding to the changed data block to data corresponding to a corresponding data block in the m^{th} backup;
**characterized in that** the m^{th} backup is a backup restoration point, there is no snapshot of the backup restoration point reserved;
the determining (302, 3021) a changed data block in the current snapshot relative to an m^{th} backup comprises: determining (3021) whether there is a changed data block between the current snapshot and a snapshot of a t^{th} backup, wherein t is a positive integer, and m is less than t; and
if there is no changed data block between the current snapshot and the snapshot of the t^{th} backup, determining (3025) a changed data block in the t^{th} backup relative to the m^{th} backup; and the restoring (303, 3022, 3023, 3024, 3026) data corresponding to the changed data block to data corresponding to a corresponding data block in the m^{th} backup comprises:
restoring (3026) data corresponding to the changed data block in the t^{th} backup relative to the m^{th} backup to data corresponding to a corresponding data block in the m^{th} backup; or
if there is a changed data block between the current snapshot and the snapshot of the t^{th} backup, the restoring (303, 3022, 3023, 3024, 3026) data corresponding to the changed data block to data corresponding to a corresponding data block in the m^{th} backup comprises:
restoring (3022) data corresponding to a changed data block in the current snapshot relative to the snapshot of the t^{th} backup to data corresponding to a corresponding data block in the t^{th} backup;
determining (3023) a changed data block in the t^{th} backup relative to the m^{th} backup; and
restoring (3024) data corresponding to the changed data block in the t^{th} backup relative to the m^{th} backup to data corresponding to a corresponding data block in the m^{th} backup.

2. The method according to claim 1, wherein the method further comprises:
if there is a changed data block between the current snapshot and the snapshot of the t^{th} backup, the restoring (303, 3022, 3023, 3024, 3026) data corresponding to the changed data block to data corresponding to a corresponding data block in the m^{th} backup comprises:
recording a first storage location of a changed data block in the current snapshot relative to the snapshot of the t^{th} backup;
determining a changed data block in the t^{th} backup relative to the m^{th} backup, and recording a second storage location of the changed data block in the t^{th} backup relative to the m^{th} backup;
restoring data in the data block corresponding to the recorded first storage location to data corresponding to a corresponding data block in the t^{th} backup; and
restoring data in the data block corresponding to the recorded second storage location to data corresponding to a corresponding data block in the m^{th} backup.

3. The method according to claim 1 or 2, wherein before the determining (302, 3021) a changed data block in the t^{th} backup relative to the m^{th} backup, the method further comprises:
creating a backup mapping table, wherein the backup mapping table comprises a storage location of a data block and a change identifier of the data block, the change identifier is used to indicate whether the data block changes relative to a previous backup, and a change identifier value corresponding to the data block varies each time after the data block changes.

4. The method according to claim 3, wherein the determining a changed data block in the t^{th} backup relative to the m^{th} backup comprises:
determining, through comparison, whether a change identifier value corresponding to a data block in a backup mapping table of the t^{th} backup is the same as a change identifier value corresponding to a data block at a same storage location in a backup mapping table of the m^{th} backup; and
determining a data block with a different change identifier value as the changed data block in the t^{th} backup relative to the m^{th} backup.

5. An incremental data restoration apparatus, comprising:
a creation module (11), configured to create a current snapshot of data;
a determining module (12), configured to determine a changed data block in the current snapshot relative to an m^{th} backup, wherein m is a positive integer, and the m^{th} backup is not a last backup; and
a restoration module (13), configured to restore data corresponding to the changed data block to data corresponding to a corresponding data block in the m^{th} backup;
**characterized in that** the m^{th} backup is a backup restoration point, there is no snapshot of the backup restoration point reserved;
wherein the determining module (12) is specifically configured to:
determine whether there is a changed data block between the current snapshot and a snapshot of a t^{th} backup, wherein t is a positive integer, and m is less than t; and
if there is no changed data block between the current snapshot and the snapshot of the t^{th} backup, determine a changed data block in the t^{th} backup relative to the m^{th} backup; and the restoration module (13) is specifically configured to:
restore data corresponding to the changed data block in the t^{th} backup relative to the m^{th} backup to data corresponding to a corresponding data block in the m^{th} backup; or
if there is a changed data block between the current snapshot and the snapshot of the t^{th} backup, the restoration module (13) is specifically configured to:
restore data corresponding to a changed data block in the current snapshot relative to the snapshot of the t^{th} backup to data corresponding to a corresponding data block in the t^{th} backup;
determine a changed data block in the t^{th} backup relative to the m^{th} backup; and
restore data corresponding to the changed data block in the t^{th} backup relative to the m^{th} backup to data corresponding to a corresponding data block in the m^{th} backup.

6. The apparatus according to claim 5, wherein if there is a changed data block between the current snapshot and the snapshot of the t^{th} backup, the restoration module (13) is specifically configured to:
record a first storage location of a changed data block in the current snapshot relative to the snapshot of the t^{th} backup;
determine a changed data block in the t^{th} backup relative to the m^{th} backup, and record a second storage location of the changed data block in the t^{th} backup relative to the m^{th} backup;
restore data in the data block corresponding to the recorded first storage location to data corresponding to a corresponding data block in the t^{th} backup; and
restore data in the data block corresponding to the recorded second storage location to data corresponding to a corresponding data block in the m^{th} backup.

7. The apparatus according to claim 5 or 6, wherein the creation module (11) is further configured to create a backup mapping table, wherein the backup mapping table comprises a storage location of the data block and a change identifier of the data block, the change identifier is used to indicate whether the data block changes relative to a previous backup, and a change identifier value corresponding to the data block varies each time after the data block changes.

8. The apparatus according to claim 7, wherein the determining module (12) is specifically configured to:
determine, through comparison, whether a change identifier value corresponding to a data block in a backup mapping table of the t^{th} backup is the same as a change identifier value corresponding to a data block at a same storage location in a backup mapping table of the m^{th} backup; and
determine a data block with a different change identifier value as the changed data block in the t^{th} backup relative to the m^{th} backup.

## Patentansprüche

1. Verfahren zur schrittweisen Datenwiederherstellung, umfassend:
Erstellen (301) eines aktuellen Schnappschusses von Daten;
Bestimmen (302, 3021) eines geänderten Datenblocks im aktuellen Schnappschuss in Bezug auf eine m-te Datensicherung, wobei m eine positive ganze Zahl ist, und die m-te Datensicherung nicht eine letzte Datensicherung ist; und
Wiederherstellen (303, 3022, 3023, 3024, 3026) von Daten, die dem geänderten Datenblock entsprechen, zu Daten, die einem entsprechenden Datenblock in der m-ten Datensicherung entsprechen;
**dadurch gekennzeichnet, dass** die m-te Datensicherung ein Datensicherungswiederherstellungspunkt ist, und es keinen Schnappschuss des Datensicherungswiederherstellungspunkts reserviert gibt;
das Bestimmen (302, 3021) eines geänderten Datenblocks im aktuellen Schnappschuss in Bezug auf eine m-te Datensicherung umfasst: Bestimmen (3021), ob es einen geänderten Datenblock zwischen dem aktuellen Schnappschuss und einem Schnappschuss einer t-ten Datensicherung gibt, wobei t eine positive ganze Zahl ist, und m kleiner als t ist; und
Bestimmen (3025) eines geänderten Datenblocks in der t-ten Datensicherung in Bezug auf die m-te Datensicherung, wenn es keinen geänderten Datenblock zwischen dem aktuellen Schnappschuss und dem Schnappschuss der t-ten Datensicherung gibt; und das Wiederherstellen (303, 3022, 3023, 3024, 3026) von Daten, die dem geänderten Datenblock entsprechen, zu Daten, die einem entsprechenden Datenblock in der m-ten Datensicherung entsprechen, umfasst:
Wiederherstellen (3026) von Daten, die dem geänderten Datenblock in der t-ten Datensicherung in Bezug auf die m-te Datensicherung entsprechen, zu Daten, die einem entsprechenden Datenblock in der m-ten Datensicherung entsprechen; oder
das Wiederherstellen (303, 3022, 3023, 3024, 3026) von Daten, die dem geänderten Datenblock entsprechen, zu Daten, die einem entsprechenden Datenblock in der m-ten Datensicherung entsprechen, wenn es einen geänderten Datenblock zwischen dem aktuellen Schnappschuss und dem Schnappschuss der t-ten Datensicherung gibt, umfasst:
Wiederherstellen (3022) von Daten, die einem geänderten Datenblock im aktuellen Schnappschuss in Bezug auf den Schnappschuss der t-ten Datensicherung entsprechen, zu Daten, die einem entsprechenden Datenblock in der t-ten Datensicherung entsprechen;
Bestimmen (3023) eines geänderten Datenblocks in der t-ten Datensicherung in Bezug auf die m-te Datensicherung; und
Wiederherstellen (3024) von Daten, die dem geänderten Datenblock in der t-ten Datensicherung in Bezug auf die m-te Datensicherung entsprechen, zu Daten, die einem entsprechenden Datenblock in der m-ten Datensicherung entsprechen.

2. Verfahren nach Anspruch 1, wobei das Verfahren ferner umfasst, dass:
das Wiederherstellen (303, 3022, 3023, 3024, 3026) von Daten, die dem geänderten Datenblock entsprechen, zu Daten, die einem entsprechenden Datenblock in der m-ten Datensicherung entsprechen, wenn es einen geänderten Datenblock zwischen dem aktuellen Schnappschuss und dem Schnappschuss der t-ten Datensicherung gibt, umfasst:
Aufzeichnen eines ersten Speicherorts eines geänderten Datenblocks im aktuellen Schnappschuss in Bezug auf den Schnappschuss in der t-ten Datensicherung;
Bestimmen eines geänderten Datenblocks in der t-ten Datensicherung in Bezug auf die m-te Datensicherung, und Aufzeichnen eines zweiten Speicherorts des geänderten Datenblocks in der t-ten Datensicherung in Bezug auf die m-te Datensicherung;
Wiederherstellen von Daten im Datenblock, der dem aufgezeichneten ersten Speicherort entspricht, zu Daten, die einem entsprechenden Datenblock in der t-ten Datensicherung entsprechen; und
Wiederherstellen von Daten im Datenblock, der dem aufgezeichneten zweiten Speicherort entspricht, zu Daten, die einem entsprechenden Datenblock in der m-ten Datensicherung entsprechen.

3. Verfahren nach Anspruch 1 oder 2, wobei das Verfahren vor dem Bestimmen (302, 3021) eines geänderten Datenblocks in der t-ten Datensicherung in Bezug auf die m-te Datensicherung ferner umfasst:
Erstellen einer Datensicherungszuordnungstabelle, wobei die Datensicherungszuordnungstabelle einen Speicherort eines Datenblocks und eine Änderungskennung des Datenblocks umfasst, die Änderungskennung verwendet wird, um anzuzeigen, ob der Datenblock sich in Bezug auf eine vorherige Datensicherung ändert, und ein Änderungskennungswert, der dem Datenblock entspricht, nach jeder Änderung des Datenblocks variiert.

4. Verfahren nach Anspruch 3, wobei das Bestimmen eines geänderten Datenblocks in der t-ten Datensicherung in Bezug auf die m-te Datensicherung umfasst:
Bestimmen durch Vergleich, ob ein Änderungskennungswert, der einem Datenblock in einer Datensicherungszuordnungstabelle der t-ten Datensicherung entspricht, gleich wie ein Änderungskennungswert ist, der einem Datenblock an einem gleichen Speicherort in einer Datensicherungszuordnungstabelle der m-ten Datensicherung entspricht; und
Bestimmen eines Datenblocks mit einem anderen Änderungskennungswert als den geänderten Datenblock in der t-ten Datensicherung in Bezug auf die m-te Datensicherung.

5. Vorrichtung zur schrittweisen Datenwiederherstellung, umfassend:
ein Erstellungsmodul (11), das zum Erstellen eines aktuellen Schnappschusses von Daten konfiguriert ist;
ein Bestimmungsmodul (12), das zum Bestimmen eines geänderten Datenblocks im aktuellen Schnappschuss in Bezug auf eine m-te Datensicherung konfiguriert ist, wobei m eine positive ganze Zahl ist, und die m-te Datensicherung nicht eine letzte Datensicherung ist; und
ein Wiederherstellungsmodul (13), das so konfiguriert sind, dass es Daten, die dem geänderten Datenblock entsprechen, zu Daten wiederherstellt, die einem entsprechenden Datenblock in der m-ten Datensicherung entsprechen;
**dadurch gekennzeichnet, dass** die m-te Datensicherung ein Datensicherungswiederherstellungspunkt ist, und es keinen Schnappschuss des Datensicherungswiederherstellungspunkts reserviert gibt;
wobei das Bestimmungsmodul (12) insbesondere konfiguriert ist zum:
Bestimmen, ob es einen geänderten Datenblock zwischen dem aktuellen Schnappschuss und einem Schnappschuss einer t-ten Datensicherung gibt, wobei t eine positive ganze Zahl ist, und m kleiner als t ist; und
Bestimmen eines geänderten Datenblocks in der t-ten Datensicherung in Bezug auf die m-te Datensicherung, wenn es keinen geänderten Datenblock zwischen dem aktuellen Schnappschuss und dem Schnappschuss der t-ten Datensicherung gibt; und das Wiederherstellungsmodul (13) insbesondere konfiguriert ist zum:
Wiederherstellen von Daten, die dem geänderten Datenblock in der t-ten Datensicherung in Bezug auf die m-te Datensicherung entsprechen, zu Daten, die einem entsprechenden Datenblock in der m-ten Datensicherung entsprechen; oder
das Wiederherstellungsmodul (13), wenn es einen geänderten Datenblock zwischen dem aktuellen Schnappschuss und dem Schnappschuss der t-ten Datensicherung gibt, insbesondere konfiguriert ist zum:
Wiederherstellen von Daten, die einem geänderten Datenblock im aktuellen Schnappschuss in Bezug auf den Schnappschuss der t-ten Datensicherung entsprechen, zu Daten, die einem entsprechenden Datenblock in der t-ten Datensicherung entsprechen;
Bestimmen eines geänderten Datenblocks in der t-ten Datensicherung in Bezug auf die m-te Datensicherung; und
Wiederherstellen von Daten, die dem geänderten Datenblock in der t-ten Datensicherung in Bezug auf die m-te Datensicherung entsprechen, zu Daten, die einem entsprechenden Datenblock in der m-ten Datensicherung entsprechen.

6. Vorrichtung nach Anspruch 5, wobei das Wiederherstellungsmodul (13), wenn es einen geänderten Datenblock zwischen dem aktuellen Schnappschuss und dem Schnappschuss der t-ten Datensicherung gibt, insbesondere konfiguriert ist zum:
Aufzeichnen eines ersten Speicherorts eines geänderten Datenblocks im aktuellen Schnappschuss in Bezug auf den Schnappschuss in der t-ten Datensicherung;
Bestimmen eines geänderten Datenblocks in der t-ten Datensicherung in Bezug auf die m-te Datensicherung und Aufzeichnen eines zweiten Speicherorts des geänderten Datenblocks in der t-ten Datensicherung in Bezug auf die m-te Datensicherung;
Wiederherstellen von Daten im Datenblock, der dem aufgezeichneten ersten Speicherort entspricht, zu Daten, die einem entsprechenden Datenblock in der t-ten Datensicherung entsprechen; und
Wiederherstellen von Daten im Datenblock, der dem aufgezeichneten zweiten Speicherort entspricht, zu Daten, die einem entsprechenden Datenblock in der m-ten Datensicherung entsprechen.

7. Vorrichtung nach Anspruch 5 oder 6, wobei das Erstellungsmodul (11) ferner zum Erstellen einer Datensicherungszuordnungstabelle konfiguriert ist, wobei die Datensicherungszuordnungstabelle einen Speicherort des Datenblocks und eine Änderungskennung des Datenblocks umfasst, die Änderungskennung verwendet wird, um anzuzeigen, ob der Datenblock sich in Bezug auf eine vorherige Datensicherung ändert, und ein Änderungskennungswert, der dem Datenblock entspricht, nach jeder Änderung des Datenblocks variiert.

8. Vorrichtung nach Anspruch 7, wobei das Bestimmungsmodul (12) insbesondere konfiguriert ist zum:
Bestimmen durch Vergleich, ob ein Änderungskennungswert, der einem Datenblock in einer Datensicherungszuordnungstabelle der t-ten Datensicherung entspricht, gleich wie ein Änderungskennungswert ist, der einem Datenblock an einem gleichen Speicherort in einer Datensicherungszuordnungstabelle der m-ten Datensicherung entspricht; und
Bestimmen eines Datenblocks mit einem anderen Änderungskennungswert als den geänderten Datenblock in der t-ten Datensicherung in Bezug auf die m-te Datensicherung.

## Revendications

1. Procédé de restauration incrémentale de données, comprenant :
la création (301) d'une copie instantanée actuelle de données ;
la détermination (302, 3021) d'un bloc de données changé dans la copie instantanée actuelle par rapport à une m^{ième} copie de secours, dans lequel m est un nombre entier positif, et la m^{ième} copie de secours n'est pas une dernière copie de secours ; et
la restauration (303, 3022, 3023, 3024, 3026) de données correspondant au bloc de données changé à des données correspondant à un bloc de données correspondant dans la m^{ième} copie de secours ;
**caractérisé en ce que** la m^{ième} copie de secours est un point de restauration de copie de secours, il n'y a aucune copie instantanée du point de restauration de copie de secours réservé ;
la détermination (302, 3021) d'un bloc de données changé dans la copie instantanée actuelle par rapport à une m^{ième} copie de secours comprend : la détermination (3021) du fait qu'il y a ou non un bloc de données changé entre la copie instantanée actuelle et une copie instantanée d'une t^{ième} copie de secours, dans lequel t est un nombre entier positif, et m est inférieur à t ; et
s'il n'y a aucun bloc de données changé entre la copie instantanée actuelle et la copie instantanée de la t^{ième} copie de secours, la détermination (3025) d'un bloc de données changé dans la t^{ième} copie de secours par rapport à la m^{ième} copie de secours ; et la restauration (303, 3022, 3023, 3024, 3026) de données correspondant au bloc de données changé à des données correspondant à un bloc de données correspondant dans la m^{ième} copie de secours comprend :
la restauration (3026) de données correspondant au bloc de données changé dans la t^{ième} copie de secours par rapport à la m^{ième} copie de secours à des données correspondant à un bloc de données correspondant dans la m^{ième} copie de secours ; ou
s'il y a un bloc de données changé entre la copie instantanée actuelle et la copie instantanée de la t^{ième} copie de secours, la restauration (303, 3022, 3023, 3024, 3026) de données correspondant au bloc de données changé à des données correspondant à un bloc de données correspondant dans la m^{ième} copie de secours comprend :
la restauration (3022) de données correspondant à un bloc de données changé dans la copie instantanée actuelle par rapport à la copie instantanée de la t^{ième} copie de secours à des données correspondant à un bloc de données correspondant dans la t^{ième} copie de secours ;
la détermination (3023) d'un bloc de données changé dans la t^{ième} copie de secours par rapport à la m^{ième} copie de secours ; et
la restauration (3024) de données correspondant au bloc de données changé dans la t^{ième} copie de secours par rapport à la m^{ième} copie de secours à des données correspondant à un bloc de données correspondant dans la m^{ième} copie de secours.

2. Procédé selon la revendication 1, le procédé comprenant en outre :
s'il y a un bloc de données changé entre la copie instantanée actuelle et la copie instantanée de la t^{ième} copie de secours, la restauration (303, 3022, 3023, 3024, 3026) de données correspondant au bloc de données changé à des données correspondant à un bloc de données correspondant dans la m^{ième} copie de secours comprend :
l'enregistrement d'une première localisation de stockage d'un bloc de données changé dans la copie instantanée actuelle par rapport à la copie instantanée de la t^{ième} copie de secours ;
la détermination d'un bloc de données changé dans la t^{ième} copie de secours par rapport à la m^{ième} copie de secours, et l'enregistrement d'une seconde localisation de stockage du bloc de données changé dans la t^{ième} copie de secours par rapport à la m^{ième} copie de secours ;
la restauration de données dans le bloc de données correspondant à la première localisation de stockage enregistrée à des données correspondant à un bloc de données correspondant dans la t^{ième} copie de secours ; et
la restauration de données dans le bloc de données correspondant à la seconde localisation de stockage enregistrée à des données correspondant à un bloc de données correspondant dans la m^{ième} copie de secours.

3. Procédé selon la revendication 1 ou 2, avant la détermination (302, 3021) d'un bloc de données changé dans la t^{ième} copie de secours par rapport à la m^{ième} copie de secours, le procédé comprenant en outre :
la création d'une table de mappage de copie de secours, dans lequel la table de mappage de copie de secours comprend une localisation de stockage d'un bloc de données et un identifiant de changement du bloc de données, l'identifiant de changement est utilisé pour indiquer si le bloc de données change par rapport à une copie de secours précédente, et une valeur d'identifiant de changement correspondant au bloc de données varie à chaque fois après que le bloc de données change.

4. Procédé selon la revendication 3, dans lequel la détermination d'un bloc de données changé dans la t^{ième} copie de secours par rapport à la m^{ième} copie de secours comprend :
la détermination, par le biais d'une comparaison, du fait qu'une valeur d'identifiant de changement correspondant à un bloc de données dans une table de mappage de copie de secours de la t^{ieme} copie de secours est, ou n'est pas, la même qu'une valeur d'identifiant de changement correspondant à un bloc de données à une même localisation de stockage dans une table de mappage de copie de secours de la m^{ième} copie de secours ; et
la détermination d'un bloc de données avec une valeur d'identifiant de changement différente en tant que bloc de données changé dans la t^{ième} copie de secours par rapport à la m^{ième} copie de secours.

5. Appareil de restauration incrémentale de données, comprenant :
un module de création (11), configuré pour créer une copie instantanée actuelle de données ;
un module de détermination (12), configuré pour déterminer un bloc de données changé dans la copie instantanée actuelle par rapport à une m^{ième} copie de secours, dans lequel m est un nombre entier positif, et la m^{ième} copie de secours n'est pas une dernière copie de secours ; et
un module de restauration (13), configuré pour restaurer des données correspondant au bloc de données changé à des données correspondant à un bloc de données correspondant dans la m^{ième} copie de secours ;
**caractérisé en ce que** la m^{ième} copie de secours est un point de restauration de copie de secours, il n'y a aucune copie instantanée du point de restauration de copie de secours réservé ;
dans lequel le module de détermination (12) est spécifiquement configuré pour :
déterminer s'il y a un bloc de données changé entre la copie instantanée actuelle et une copie instantanée d'une t^{ième} copie de secours, dans lequel t est un nombre entier positif, et m est inférieur à t ; et
s'il n'y a aucun bloc de données changé entre la copie instantanée actuelle et la copie instantanée de la t^{ième} copie de secours, déterminer un bloc de données changé dans la t^{ième} copie de secours par rapport à la m^{ième} copie de secours ; et le module de restauration (13) est spécifiquement configuré pour :
restaurer des données correspondant au bloc de données changé dans la t^{ième} copie de secours par rapport à la m^{ième} copie de secours à des données correspondant à un bloc de données correspondant dans la m^{ième} copie de secours ; ou
s'il y a un bloc de données changé entre la copie instantanée actuelle et la copie instantanée de la t^{ième} copie de secours, le module de restauration (13) est spécifiquement configuré pour :
restaurer des données correspondant à un bloc de données changé dans la copie instantanée actuelle par rapport à la copie instantanée de la t^{ième} copie de secours à des données correspondant à un bloc de données correspondant dans la t^{ième} copie de secours ;
déterminer un bloc de données changé dans la t^{ième} copie de secours par rapport à la m^{ième} copie de secours ; et
restaurer des données correspondant au bloc de données changé dans la t^{ième} copie de secours par rapport à la m^{ième} copie de secours à des données correspondant à un bloc de données correspondant dans la m^{ième} copie de secours.

6. Appareil selon la revendication 5, dans lequel, s'il y a un bloc de données changé entre la copie instantanée actuelle et la copie instantanée de la t^{ième} copie de secours, le module de restauration (13) est spécifiquement configuré pour :
enregistrer une première localisation de stockage d'un bloc de données changé dans la copie instantanée actuelle par rapport à la copie instantanée de la t^{ième} copie de secours ;
déterminer un bloc de données changé dans la t^{ième} copie de secours par rapport à la m^{ième} copie de secours, et enregistrer une seconde localisation de stockage du bloc de données changé dans la t^{ième} copie de secours par rapport à la m^{ième} copie de secours ;
restaurer des données dans le bloc de données correspondant à la première localisation de stockage enregistrée à des données correspondant à un bloc de données correspondant dans la t^{ième} copie de secours ; et
restaurer des données dans le bloc de données correspondant à la seconde localisation de stockage enregistrée à des données correspondant à un bloc de données correspondant dans la m^{ième} copie de secours.

7. Appareil selon la revendication 5 ou 6, dans lequel le module de création (11) est en outre configuré pour créer une table de mappage de copie de secours, dans lequel la table de mappage de copie de secours comprend une localisation de stockage du bloc de données et un identifiant de changement du bloc de données, l'identifiant de changement est utilisé pour indiquer si le bloc de données change par rapport à une copie de secours précédente, et une valeur d'identifiant de changement correspondant au bloc de données varie à chaque fois après que le bloc de données change.

8. Appareil selon la revendication 7, dans lequel le module de détermination (12) est spécifiquement configuré pour :
déterminer, par le biais d'une comparaison, si une valeur d'identifiant de changement correspondant à un bloc de données dans une table de mappage de copie de secours de la t^{ième} copie de secours est la même qu'une valeur d'identifiant de changement correspondant à un bloc de données à une même localisation de stockage dans une table de mappage de copie de secours de la m^{ième} copie de secours ; et
déterminer un bloc de données avec une valeur d'identifiant de changement différente en tant que bloc de données changé dans la t^{ième} copie de secours par rapport à la m^{ième} copie de secours.
